# NEUE EUROPÄISCHE PATENTSCHRIFT

(11) **EP 2 158 423 B2**
(45) Veröffentlichungstag und Bekanntmachung des Hinweises auf die Entscheidung über den Einspruch: **20.06.2018**
(45) Hinweis auf die Patenterteilung: 01.10.2014
(21) Anmeldenummer: 08773518.9
(22) Anmeldetag: 19.06.2008
(51) Int. Cl.: F16K 31/08, F16K 49/00

(54) **VENTIL, INSBESONDERE LEIMVENTIL**
VALVE, PARTICULARLY GLUE VALVE
SOUPAPE, NOTAMMENT UNE SOUPAPE À COLLE

(30) Priorität: 21.06.2007 DE 102007029064
(43) Veröffentlichungstag der Anmeldung: 03.03.2010
(73) Patentinhaber: Focke & Co. (GmbH & Co. KG), 27283 Verden (DE)
(72) Erfinder: HOPPE, Reinhard, 21395 Tespe (DE); BARKMANN, Ralf, 21031 Hamburg (DE); HARMS, Stefan, 22395 Hamburg (DE); SCHÖNHERR, Christian, 49170 Hagen am Teutoburger Wald (DE)
(74) Vertreter: Ellberg, Nils
(86) Internationale Anmeldenummer: PCT/EP2008/004933
(87) Internationale Veröffentlichungsnummer: WO 2008/155117

(56) Entgegenhaltungen:
- EP-A- 0 719 592
- EP-A- 1 277 694
- EP-A2- 1 936 248
- US-A- 4 630 799
- US-A1- 2004 195 278

## Beschreibung

Die Erfindung betriff ein Ventil für fließfähige Medien, nämlich ein Leimventil, mit einem Ventilgehäuse, einer Austritts bzw. Ventilöffnung und einem innerhalb des Ventilgehäuses bewegbaren Verschlussorgan, welches mit einem endseitigen Schließstück bei geschlossenem Ventil an einem Ventilsitz dichtend Anlage erhält, wobei das Verschlussorgan innerhalb des Ventilgehäuses durch ein Betätigungsmittel, insbesondere durch einen Elektromagneten, in Öffnungsstellung und durch Dauermagnete in Schließstellung bewegbar ist und die in Schließstellung des Verschlussorgans wirkende Magnetkraft bzw. magnetische Feldstärke schwächer ist als die auf das Verschlussorgan wirkende Öffnungskraft des Betätigungsmittels.

Leimdüsen bzw. Leimventile sind auf die Ausgabe kleiner Leimportionen bei sehr hoher Taktzahl ausgerichtet. Bei einer bekannten Leimdüse ist ein langgestrecktes Verschlussorgan mit kegelförmigem Schließstück im Ventilgehäuse durch einen Elektromagneten in Öffnungsstellung und durch eine Schraubenfeder jeweils in die Schließstellung bewegbar (EP 0 719 592 A2). Das als vorgespannte Feder ausgebildete Schließorgan ist bei langer Betriebsdauer und hoher Taktzahl von Öffnungs- und Schließbewegungen unbefriedigend.

Die Druckschrift US 4,630,799 zeigt ein Ventil, dessen Verschlussorgan bedingt durch die Strömung des durch das Ventil fließendes Mediums von einer Öffnungsstellung in eine Schließstellung bewegt wird bzw. von einer Schließstellung in eine Öffnungsstellung.

Diese strömungsgedingte Bewegung kann mittels eines Elektromagneten verstärkt oder ins Gegenteil verkehrt werden.

Der Erfindung liegt die Aufgabe zugrunde, ein Leimventil, insbesondere für die Übertragung von Leimportionen vorzuschlagen, dass auf eine lange Lebensdauer bei hohen Taktzahlen ausgelegt ist und darüber hinaus sehr exakt kleine (Leim-)Portionen abzugeben vermag.

Zur Lösung dieser Aufgabe weist das erfindungsgemäße Leimventil die Merkmale des Anspruchs 1 auf.

Das erfindungsgemäße Ventil ist demnach so ausgebildet, dass ein Bewegungstakt des Verschlussorgans durch das Zusammenwirken von zwei Dauermagneten ausgeführt wird, und zwar insbesondere eine Schließbewegung. Zum Öffnen wirkt entgegen ein geeignetes Betätigungsorgan, insbesondere ein Elektromagnet.

Das Verschlussorgan erhält in Öffnungsstellung Anlage an einem feststehenden Anschlagteil des Ventils bzw. des Ventilgehäuses, wobei zum Schutz der einander zugekehrten Dauermagneten die Abstandhalter einen geringen Abstand der Organe bzw. Dauermagneten voneinander sicherstellen.

In besonderer Weise ist das Verschlussorgan ausgebildet. Ein länglicher Verschlusskörper, insbesondere in einer im Wesentlichen zylindrischen Ausführung, weist am Umfang in Längsrichtung verlaufende Vertiefungen, Kanäle oder dergleichen auf, die den Durchfluss des Mediums, insbesondere des Leims entlang der Mantelfläche des Verschlusskörpers ermöglichen. Vorsprünge bzw. Rippen des Verschlusskörpers dienen zur Anlage an einer insbesondere zylindrischen Innenfläche des Ventilgehäuses. Am Verschlusskörper sind vorzugsweise auch die Abstandhalter angeordnet.

Eine weitere Besonderheit ist die Ausbildung des Ventilsitzes. Dieser besteht aus einer in das Gehäuse lösbar eingesetzten Fassung, insbesondere aus Metall bzw. rostfreiem Stahl und einem in diese Fassung eingesetzten Düsenkörper aus besonders verschleißfestem Material, insbesondere Keramik. Dieser Düseneinsatz ist vorzugsweise durch Klebung mit der Fassung verbunden.

Weitere Merkmale und Besonderheiten des Erfindungsgemäßen Ventils werden nachfolgend anhand der Beschreibung von Ausführungsbeispielen näher erläutert. Es zeigt:
- Fig. 1: ein (Leim-)Ventil im Vertikalschnitt,
- Fig. 2: einen Ausschnitt II des Ventils gemäß Fig. 1 in vergrößertem Maßstab,
- Fig. 3: das Ventil gemäß Fig. 1 in Ansicht gemäß Pfeil III, in vergrößertem Maßstab,
- Fig. 4: eine Einzelheit des Ventils im Horizontalschnitt, ebenfalls vergrößert,
- Fig. 5: eine Darstellung analog Fig. 4 des Ausführungsbeispiels gemäß Fig. 2 in der Schnittebene V-V,
- Fig. 6: eine Darstellung des Ventils analog Fig. 1 mit zusätzlichen Organen,
- Fig. 7: das Ausführungsbeispiel gemäß Fig. 6 in einer Schnittebene bzw. Draufsicht VII-VII gemäß Fig. 6,

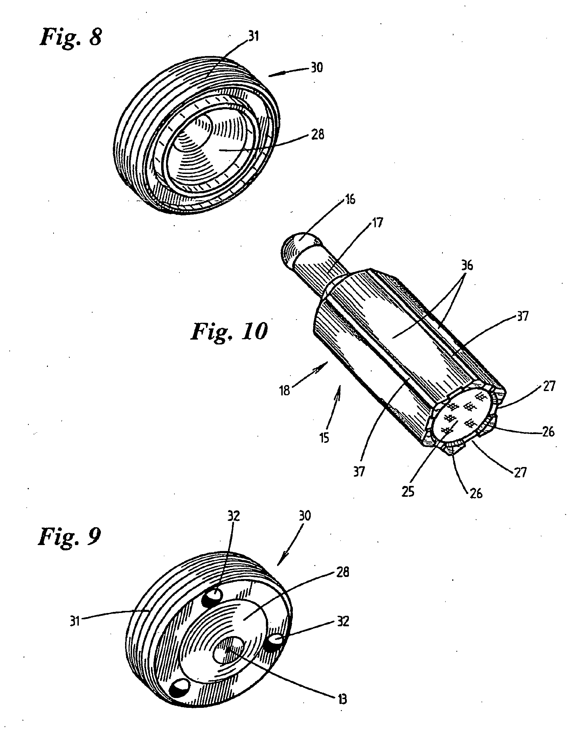

- Fig. 8: eine Einzelheit des Ventils in perspektivischer Darstellung, nämlich einen Düseneinsatz,
- Fig. 9: die Einzelheit gemäß Fig. 8 in einer anderen Ansicht, ebenfalls perspektivisch,
- Fig. 10: ein Verschlussorgan als Einzelheit des Ventils, perspektivisch.

Die gezeigten Ausführungsbeispiele betreffen ein Ventil bzw. eine Düse für strömende Medien. Im Vordergrund steht die Anwendung als Leimventil in der Verpackungstechnik zur Übertragung von kleinen Leimportionen bzw. von Leimpunkten auf Trägermaterial, insbesondere auf Faltlappen von Zigaretten-Packungen.

Das Leimventil besteht aus einem Ventilgehäuse 11, dem das Medium, also Leim, über eine Leimleitung 12 zuführbar ist. Die Leimportionen treten aus einer (unteren) Ventilöffnung 13 bzw. Düsenöffnung aus, die von einem konischen bzw. kegelförmigen Ventilsitz 14 begrenzt ist. Mit diesem wirkt ein bewegbares Verschlussorgan 15 zusammen, welches mit einem dem Ventilsitz 14 bzw. der Ventilöffnung 13 zugekehrten Schließkörper bzw. einem kugelförmigen Schließstück 16 versehen ist. Dieses erhält bei geschlossener Ventilöffnung 13 dichtend Anlage an dem konischen Ventilsitz 14. Das Schließstück 16 ist über ein Zwischenstück 17 mit einem Kolbenstück 18 als Teil des Verschlussorgans 15 verbunden. Das Kolbenstück 18 und damit das Verschlussorgan 15 insgesamt ist innerhalb des Ventilgehäuses 11 in Richtung zum Ventilsitz 14 und zurückbewegbar. Oberhalb des Ventilssitzes 14 ist eine Ventilkammer 19 gebildet, in die die Leimleitung 12 mündet und aus der bei geöffnetem Ventil Leim über die Ventilöffnung 13 austritt.

Das Ventilgehäuse 11 ist mit einem durchgehenden, auf der zur Ventilöffnung 13 gegenüberliegenden Seite offenen, im Querschnitt runden Innenraum 20 versehen. Dieser ist durch ein Verschlussstück 21 verschlossen, welches einstellbar in einer fixierten Position innerhalb des Ventilgehäuses 11 angeordnet ist. Das Verschlussstück 21 dient zugleich als Anschlag für das hin- und her (aus- und ab-)bewegbare Verschlussorgan 15.

Das Verschlussorgan 15 ist durch ein Schließorgan in Schließstellung und durch ein Betätigungsorgan in Öffnungsstellung bewegbar. Das Schließorgan ist vorzugsweise ständig wirksam, sodass die Schließstellung des Ventils bzw. des Schließstücks 16 die Normalstellung ist. Das Rückholorgan zur Bewegung des Verschlussorgans 15 in die Öffnungsstellung ist ein Elektromagnet 23, der das Verschlussorgan 15 mindestens in einem Teilbereich umgibt. Das metallische Kolbenstück 18 aus magnetisierbarem Metall wirkt innerhalb einer Spule des Elektromagneten 23 als dessen Kern. Bei Stromzufuhr wird demnach eine Magnetkraft auf das Kolbenstück 18 übertragen und dadurch das Verschlussorgan 15 insgesamt in die Öffnungsstellung bewegt.

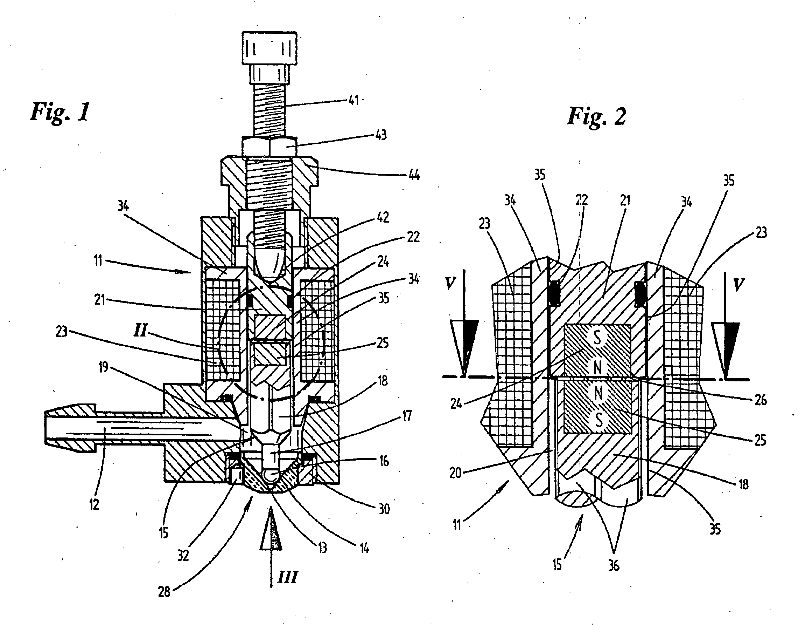

Das Verschlussorgan 15 ist vorzugsweise permanent in Schließrichtung beaufschlagt durch ein Schließmittel. Dieses ist als Dauermagnet ausgebildet, der eine permanente Magnetkraft auf das Verschlussorgan 15 im Sinne einer Schließbewegung ausübt. Der Dauermagnet besteht aus zwei Einzelmagneten 24, 25, von denen einer fest am Ventilgehäuse 11 und der andere am Verschlussorgan 15 angebracht ist. Im vorliegenden Falle ist ein Einzelmagnet 24 am Endbereich des Verschlussstücks 21 angebracht, und zwar im Bereich einer dem Kolbenstück 18 zugekehrten Endfläche. Der Elektromagnet 24 sitzt in einer Ausnehmung bzw. Vertiefung im Endbereich des Verschlussstücks 21, und zwar geringfügig zurückversetzt gegenüber der End- bzw. Stirnfläche des Verschlussstücks 21. Der Einzelmagnet 24 ist dadurch geschützt (Fig. 2).

Der andere Einzelmagnet 25 ist in analoger Weise am (oberen) Ende des Verschlussorgans 15 bzw. des Kolbenstücks 18 angebracht bzw. in eine entsprechende Ausnehmung eingebettet. Die Einzelmagnete 24, 25 haben demnach auch bei geöffnetem Leimventil einen (geringen) Abstand voneinander. Die Hubbewegungen des Verschlussorgans 15 liegen in einem begrenzten Bereich von 0,2 mm bis 0,8 mm, insbesondere in einem Bereich von 0,2 mm bis 0,5 mm. Eine optimale Hubgröße beträgt 0,3 mm.

Die einander benachbarten Dauermagnete 24, 25 sind so positioniert, dass gleiche Pole einander zugekehrt sind, zum Beispiel die Nordpole (Fig. 2). Durch die Dauer-Einzelmagnete 24, 25 wird dadurch permanent eine abstoßende Kraft auf das Verschlussorgan 15 übertragen, sodass dieses in Schließstellung beaufschlagt ist. Die Öffnungsbewegung durch den Elektromagneten 23 überwindet diese permanente Schließkraft.

Der Elektromagnet 23 bzw. dessen Wicklung ist in einem Einsatzstück 28 angeordnet, welches im Vertikal- bzw. Axialschnitt eine U-förmige, ringsherum laufende Ausnehmung bildet für die Wicklung des Elektromagneten 23. Das Einsatzstück bildet einen zylindrischen Teil der Ventilkammer 19. Der Elektromagnet 23 erstreckt sich in einem Bereich, derart, dass auch die beiden Einzelmagneten 24, 25 und ein Teilbereich des Verschlussorgans 15 umfasst sind.

Das Verschlussorgan 15 ist in besonderer Weise ausgebildet. Das Kolbenstück 18 ist auf Form und Abmessung des Innenraums bzw. der Ventilkammer 19 im Bereich eines zylindrischen Führungsteils 34 abgestimmt. Das Verschlussorgan 15 ist so ausgebildet, dass zwischen diesem und einer (zylindrischen) Innenfläche 35 des Ventilgehäuses 11 definierte Räume für den Durchtritt von Medium, insbesondere Leim, gebildet sind. Der Leim kann demnach in den Bereich zwischen Verschlussorgan 15 und Ventilgehäuse 11 bzw. Führungsteil 34 eintreten bis zum Verschlussstück 21. Zu diesem Zweck sind am Umfang des Verschlussorgans 15 im Bereich des Kolbenstücks 18 Kanäle, Nuten oder ähnliche Strömungswege für das Medium gebildet. Bei dem bevorzugten Ausführungsbeispiel sind ringsherum und bei gleichmäßiger Verteilung Strömungskanäle 36 gebildet. Diese erstrecken sich über die volle Länge des Kolbenstücks 18, also bis zu einer dem Verschlussstück 21 zugekehrten Endfläche. Zwischen den mehreren Strömungskanälen sind Stütz- bzw. Führungsorgane, insbesondere rippenartige Vorsprünge 37 gebildet, die eine Führung bzw. Anlage des Verschlussorgans 18 an der Innenwandung des Ventilgehäuses 11 bewirken, sodass das Verschlussorgan 15 innerhalb des zylindrischen Teils des Ventilgehäuses 11 exakt zentriert ist.

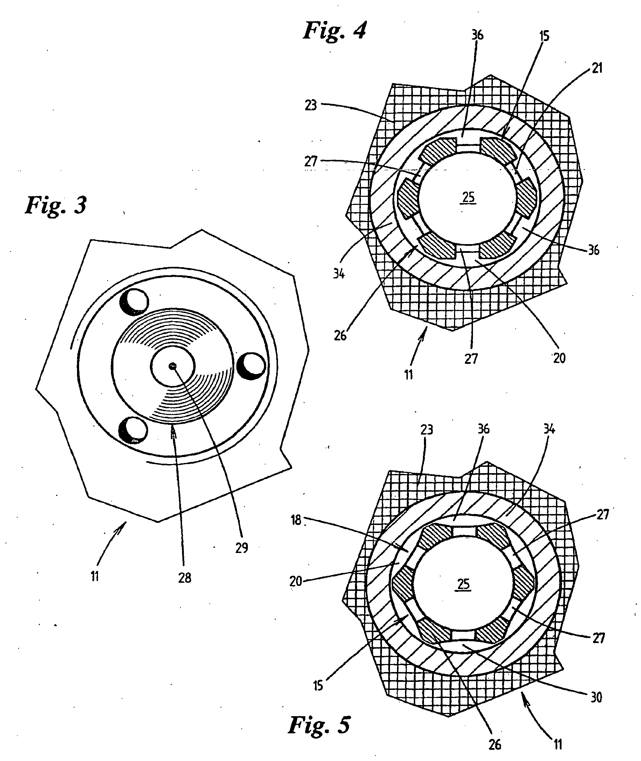

Bei dem Ausführungsbeispiel gemäß Fig. 4 sind die seitwärts gerichteten rippenartigen Vorsprünge 37 polygonartig ausgebildet mit einer mittigen Stützfläche. Die dadurch gebildeten bzw. begrenzten Strömungskanäle 36 sind entsprechend polygonartig an der Innenseite ausgebildet. Bei dem Ausführungsbeispiel gemäß Fig. 5 sind die Strömungskanäle 36 im Querschnitt muldenartig ausgebildet, sodass insgesamt ein linsenförmiger Querschnitt zwischen Verschlussorgan 15 und Führungsteil 34 entsteht.

Durch Abstandhalter wird sichergestellt, dass die Einzelmagnete 24, 25 stets einen Abstand voneinander aufweisen, und zwar auch in der Öffnungsstellung des Verschlussorgans 15. Die Einzelmagnete 24, 25 mit geringerem Durchmesser als der jeweilige Träger, nämlich als das Verschlussstück 21 einerseits und das Verschlussorgan 15 andererseits. Die Abstandhalter sind in einem Bereich außerhalb der freien Flächen der Einzelmagnete 24, 25 angeordnet. Bei dem vorliegenden Ausführungsbeispiel ist an einem der Teile, hier am bewegbaren Verschlussorgan 15, ein Distanzring 26 angebracht, der quer- bzw. radialgerichtete Durchbrüche 27 bzw. Ausnehmungen für den Durchtritt des Mediums aufweist. Die Durchbrüche 27 sind von Vorsprüngen begrenzt, die die ringsherum verteilt angeordneten Abstandhalter bilden. Die Durchbrüche 27 befinden sich im Bereich der Strömungskanäle 36 des Verschlussorgans 15.

Eine Besonderheit ist die Ausbildung des Ventilsitzes 14. Der Ventilsitz 14 besteht aus einem Einsatzstück 28 aus hochfestem Material, insbesondere aus Keramik. In dem Einsatzstück ist mindestens eine Düsenöffnung, im vorliegenden Fall eine mittige Düsenöffnung 13 vorgesehen. Auf der dem Schließstück 16 zugekehrten Seite führt eine trichterförmige Vertiefung des Einsatzstücks 28 zu der Düsenöffnung 29.

Das Einsatzstück 28 ist mit einer Halterung verbunden, nämlich einem Haltering 30, insbesondere aus Metall, nämlich aus Edelstahl. Das Einsatzstück 28 ist in dem Haltering 30 fixiert, insbesondere durch Verklebung mit diesem verbunden. Der Haltering 30 ist seinerseits lösbar am Ventilgehäuse 11 angebracht, bei dem vorliegenden Beispiel mittels Gewinde 31. An der freien Seite des Halterings 30 sind Ausnehmungen, nämlich Sacklöcher 32 angebracht, die das Ansetzen eines Werkzeugs zum Einführen oder Lösen des Halterings 30 in dem mit Gegengewinde ausgebildeten Ventilgehäuse 11 zu ermöglichen.

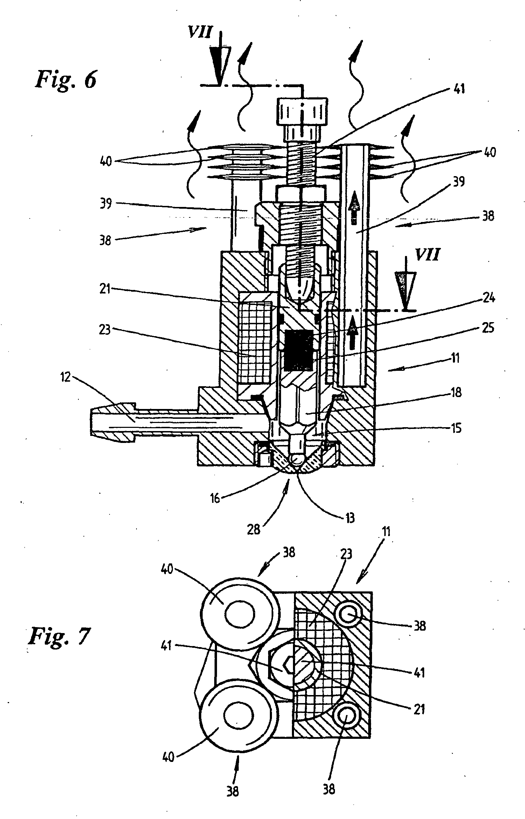

Eine weitere Besonderheit des Ventils beliebiger Ausführung ist die Kühlung des Ventilgehäuses 11. Gemäß Fig. 6, Fig. 7 ist eine selbsttätig wirkende Kühlung installiert, und zwar durch Anbringen von Kühlrohren, sogenannten Heatpipes 38 am Ventilgehäuse 11 bzw. im Ventilgehäuse 11. Die Heatpipes 38 sind außerhalb des Bereichs des Elektromagneten 23 bzw. außerhalb der Wicklung desselben in das Ventilgehäuse 11 eingebettet. Bei einem im Querschnitt quadratischen Ventilgehäuse 11 (Fig. 7) sind vier Heatpipes 38 an den Ecken des Ventilgehäuses 11 angeordnet. Die Heatpipes 38 erstrecken sich mindestens über die volle Höhe der Wicklungen des Elektromagneten 23. Ein oberes Rohrstück 39 ragt aus dem Ventilgehäuse 11 heraus. In diesem Teil ist jede Heatpipe 38 mit quergerichteten Lamellen 40 versehen zum Abführen der Wärme an die Umgebung.

Die Heatpipes 38 bewirken selbsttätig eine Abfuhr der Wärme durch Strömung zum freien, offenen, oberen Ende.

In besonderer Weise ist das Verschlussstück 21 (verstellbar) im Ventilgehäuse 11 positioniert. Das Verschlussstück 21 ist als zylindrisches Stück passend im zylindrischen Teil der Ventilkammer 19 angeordnet. Am Verschlussstück 21 ist ein Stellorgan angebracht zum Justieren der Stellung des Verschlussstücks 21. Es handelt sich dabei um eine Stellschraube 41. Diese ist mit einem freien Endteil des Verschlussstücks 21 verbunden, tritt nämlich mit einem freien Ende in eine axiale Ausnehmung 42 ein. In diesem ist das Ende der Stellschraube 41 verankert, insbesondere durch einen (Metall-)Kleber. Auf der mit Gewinde versehenen Stellschraube 41 ist eine Stellmutter 43 angeordnet, die mit Innengewinde auf der Stellschraube 41 sitzt und mit Außengewinde in einem Kopf 44 des Ventilgehäuses 11 verankert ist. Der Kopf 44 ist ebenfalls mittels Gewinde fest mit dem Ventilgehäuse 11 verbunden. Durch Drehen der Stellschraube 41 wird diese in der Höhe verändert mit einer entsprechenden Verschiebung des Verschlussstücks 21.

**Bezugszeichenliste**

| | | | |
|---|---|---|---|
| 11 | Ventilgehäuse | 42 | Ausnehmung |
| 12 | Leimleitung | 43 | Stellmutter |
| 13 | Ventilöffnung | 44 | Kopf |
| 14 | Ventilsitz | | |
| 15 | Verschlussorgan | | |
| 16 | Schließstück | | |
| 17 | Zwischenstück | | |
| 18 | Kolbenstück | | |
| 19 | Ventilkammer | | |
| 20 | Innenraum | | |
| 21 | Verschlussstück | | |
| 22 | Dichtung | | |
| 23 | Elektromagnet | | |
| 24 | Einzelmagnet | | |
| 25 | Einzelmagnet | | |
| 26 | Distanzstück | | |
| 27 | Durchbruch | | |
| 28 | Einsatzstück | | |
| 30 | Haltering | | |
| 31 | Gewinde | | |
| 32 | Sackloch | | |
| 34 | Führungsteil | | |
| 35 | Innenfläche | | |
| 36 | Strömungskanal | | |
| 37 | Vorsprung | | |
| 38 | Heatpipe | | |
| 39 | Rohrstück | | |
| 40 | Lamellen | | |
| 41 | Stellschraube | | |

## Patentansprüche

1. Leimventil zur Übertragung von Leimportionen auf Trägermaterial, mit einem Ventilgehäuse (11), einer Austritts- bzw. Ventilöffnung (13) und einem innerhalb des Ventilgehäuses (11) bewegbaren Verschlussorgan (15), welches mit einem endseitigen Schließstück (16) bei geschlossenem Ventil an einem Ventilsitz (14) dichtend Anlage erhält, wobei das Verschlussorgan (15) innerhalb des Ventilgehäuses (11) durch ein Betätigungsmittel, insbesondere durch einen Elektromagneten (23), in Öffnungsstellung und durch Dauermagnete in Schließstellung bewegbar ist und die in Schließstellung des Verschlussorgans (15) wirkende Magnetkraft bzw. magnetische Feldstärke schwächer ist als die auf das Verschlussorgan (15) wirkende Öffnungskraft des Betätigungsmittels, wobei
a) ein erster Dauermagnet (24) innerhalb des Ventilgehäuses (11) an einem fixierten Träger und ein zweiter Dauermagnet (25) gegenüberliegend und mit gleichgerichtetem Magnetpol am Verschlussorgan (15) angeordnet ist, und
b) die mit etwas geringeren Querabmessungen ausgebildeten Dauermagneten (24. 25) in den Träger einerseits und in das Verschlussorgan (15) andererseits eingebettet sind, derart, dass gleichgerichtete Magnetpole der beiden Dauermagnete einander zugekehrt sind, und
c) die zueinander benachbart angeordneten Einzelmagnete (24, 25) in der einander zugekehrten Endstellung, insbesondere entsprechend der Öffnungsstellung des Verschlussorgans (15), durch Abstandsorgane bzw. Abstandshalter außerhalb des Bereichs der Einzelmagnete (24, 25) einen definierten Abstand voneinander aufweisen, nämlich durch ein am Ende des Verschlussorgans (15) angeordnetes, ringförmiges Distanzstück (26) mit quergerichteten Durchbrüchen (27) für den Durchtritt von Leim.

2. Ventil nach Anspruch 1, **dadurch gekennzeichnet, dass** die Dauermagnete (24, 25) bei geöffnetem Ventil, also bei einer vom Ventilsitz (14) zurückgezogenen Stellung des Verschlussorgans (15), in Abstand, insbesondere geringem Abstand, voneinander fixiert sind, insbesondere durch Abstandhalter (26) an einer Endfläche des Verschlussorgans (15) und/oder am Träger des fest fixierten Dauermagneten (24).

3. Ventil nach Anspruch 1 oder 2, **dadurch gekennzeichnet, dass** die Abstandhalter aus einem außerhalb des Bereichs des Dauermagneten (25) angeordneten Distanzstück (26), insbesondere ringförmigen Distanzstück, bestehen, welches durch Unterbrechungen, insbesondere durch radial gerichtete Durchbrüche (27) in einzelne, längs des Umfangs des Verschlussorgans (15) verteilten Abstandhaltern besteht, wobei die Durchbrüche (27) zum Durchfluss des fließfähigen Mediums dienen.

4. Ventil nach Anspruch 1 oder einem der weiteren Ansprüche, **dadurch gekennzeichnet, dass** das längliche, annähernd zylindrische Verschlussorgan am Außenumfang in Längsrichtung verlaufende Vertiefungen, Kanäle (36), Nuten oder dergleichen aufweist mit steg- oder rippenartigen Vorsprüngen (37) in Längsrichtung des Verschlussorgans (15) jeweils zwischen mehreren in Umfangsrichtung verteilten Kanälen (36), Nuten, Vertiefungen oder dergleichen, wobei die Vorsprünge (37) zur Abstützungen des Verschlussorgans (15) an einer vorzugsweise zylindrischen Innenfläche (35) des Ventilgehäuses (11) dienen.

5. Ventil nach Anspruch 1 oder einem der weiteren Ansprüche, **dadurch gekennzeichnet, dass** in dem Ventilgehäuse (11), nämlich in einem vorzugsweise etwa zylindrischen Innenraum (20) des Gehäuses (11) ein den Innenraum (20) ausfüllendes Abstützorgan, insbesondere ein Verschlussstück (21) angeordnet ist als Träger des fixierten Dauermagneten (24) im unteren Endbereich, wobei das Verschlussstück (21) vorzugsweise als Anschlag für das Verschlussorgan (15) in Öffnungsstellung dient.

6. Ventil nach Anspruch 5 oder einem der weiteren Ansprüche, **dadurch gekennzeichnet, dass** das Verschlussstück (21) verstellbar im Ventilgehäuse (11) gehalten ist, insbesondere durch eine aus dem Ventilgehäuse (11) austretende Stellschraube (41), die mit dem Verschlussstück (21) verbunden ist, vorzugsweise durch Eintritt eines freien Endes der Stellschraube (41) in eine axiale Ausnehmung (42) des Verschlussstück (21) und Verbindung miteinander mittels Presssitz und/oder Klebung.

7. Ventil nach Anspruch 1 oder einem der weiteren Ansprüche, **gekennzeichnet durch** die Anordnung von Kühlmitteln innerhalb des Ventilgehäuses (11), insbesondere benachbart zum Elektromagneten (23) bzw. zu dessen Wicklung, wobei die Kühlmittel vorzugsweise als aufrechte Heatpipes (38) ausgebildet und im Ventilgehäuse (11) derart angeordnet sind, dass eine vorzugsweise nach oben gerichteten Austrittöffnung frei liegt.

8. Ventil nach Anspruch 7 oder einem der weiteren Ansprüche, **dadurch gekennzeichnet, dass** bei einem Ventilgehäuse (11) mit im Wesentlichen rechteckigem oder quadratischem Querschnitt insbesondere vier Heatpipes (38) jeweils im Bereich von Ecken des Ventilgehäuses (11) angeordnet sind.

9. Ventil nach Anspruch 7 oder einem der weiteren Ansprüche, **dadurch gekennzeichnet, dass** die rohrförmigen Heatpipes (38) mit einer Verlängerung, nämlich einem freien Rohrstück (39) an einer Oberseite aus dem Ventilgehäuse (11) herausragen, wobei im Bereich des Rohrstücks (39) quergerichtete Lamellen (40) angebracht sind zur Ableitung der Wärme.

## Claims

1. A glue valve for transferring portions of glue onto support material, having a valve housing (11), a discharge or valve opening (13), and a closure element (15) which is movable within the valve housing (11) and which, with an end-sided closing piece (16), when the valve is closed, is held in sealing contact with a valve seat (14), wherein the closure element (15) can be moved within the valve housing (11) by an actuating means, in particular by an electromagnet (23), into an opening position and by permanent magnets into a closing position, and the magnetic force or magnetic field strength which acts in the closing position of the closure element (15) is weaker than the opening force of the actuating means which acts upon the closure element (15), **whereas**
a) a first permanent magnet (24) is arranged within the valve housing (11) on a fixed support and a second permanent magnet (25) is arranged opposite thereto, and with aligned magnetic pole, on the closure element (15), and
b) the permanent magnets (24, 25) configured with somewhat smaller transverse dimensions are embedded in the support on the one hand and in the closure element (15) on the other hand, such that aligned magnetic poles of the two permanent magnets are facing each other, and
c) the mutually adjacent single magnets (24, 25), in the mutually facing end position, in particular corresponding to the opening position of the closure element (15), are spaced at a defined distance apart by virtue of spacing elements or spacers outside the region of the single magnets (24, 25), namely by virtue of an annular distancing piece (26) arranged on the end of the closure element (15) and having transversely directed apertures (27) for the passage of glue.

2. The valve as claimed in claim 1, **characterized in that** the permanent magnets (24, 25), when the valve is open, that is to say when the closure element (15) is in a position withdrawn from the valve seat (14), are fixed at a distance, in particular a short distance, apart, in particular by spacers (26) on an end face of the closure element (15) and/or on the support of the fixedly fixed permanent magnets (24).

3. The valve as claimed in claim 1 or 2, **characterized in that** the spacers consist of an distancing piece (26), in particular an annular distancing piece, which is arranged outside the region of the permanent magnet (25) and which, by virtue of interruptions, in particular by virtue of radially directed apertures (27), consists in individual spacers distributed along the periphery of the closure element (15), the apertures (27) serving for the throughflow of the fluid medium.

4. The valve as claimed in claim 1 or one of the further claims, **characterized in that** the elongated, approximately cylindrical closure element has on the outer periphery longitudinally running depressions, channels (36), grooves or the like, with web-shaped or rib-shaped projections (37) in the longitudinal direction of the closure element (15) respectively between a plurality of peripherally distributed channels (36), grooves, depressions or the like, the projections (37) serving as the supports of the closure element (15) on a preferably cylindrical inner face (35) of the valve housing (11).

5. The valve as claimed in claim 1 or one of the further claims, **characterized in that** in the valve housing (11), namely in a preferably roughly cylindrical inner space (20) of the housing (11), a supporting element filling the inner space (20), particularly a closure piece (21), is arranged as a support of the fixed permanent magnet (24) in the lower end region, the closure piece (21) preferably serving as a stop for the closure element (15) in the opening position.

6. The valve as claimed in claim 5 or one of the further claims, **characterized in that** the closure piece (21) is held adjustably in the valve housing (11), in particular by an adjusting screw (41) which protrudes from the valve housing (11) and is connected to the closure piece (21), preferably by entry of a free end of the adjusting screw (41) into an axial recess (42) in the closure piece (21) and the mutual connection thereof by means of press fit and/or gluing.

7. The valve as claimed in claim 1 or one of the further claims, **characterized by** the arrangement of cooling means within the valve housing (11), in particular adjacent to the electromagnet (23) or to its winding, the cooling means preferably being configured as upright heat pipes (38) and being arranged in the valve housing (11) such that a preferably upwardly directed discharge opening is exposed.

8. The valve as claimed in claim 7 or one of the further claims, **characterized in that,** in a valve housing (11) of substantially rectangular or square cross section, in particular four heat pipes (38) are arranged respectively in the region of corners of the valve housing (11).

9. The valve as claimed in claim 7 or one of the further claims, **characterized in that** the tubular heat pipes (38) project with an extension, namely with a free pipe section (39) on a top side, from the valve housing (11), transversely directed fins (40) being fitted in the region of the pipe section (39) for the dispersion of the heat.

## Revendications

1. Soupape à colle pour le transfert de portions de colle sur du matériau de support, comprenant un boîtier de soupape (11), une ouverture de sortie ou de soupape (13) et un organe de fermeture (15) déplaçable à l'intérieur du boîtier de soupape (11), lequel organe de fermeture s'applique de manière étanche, par une pièce de fermeture (16) du côté de son extrémité, contre un siège de soupape (14) lorsque la soupape est fermée, l'organe de fermeture (15) étant déplaçable à l'intérieur du boîtier de soupape (11), au moyen d'un moyen d'actionnement, en particulier au moyen d'un électroaimant (23), dans la position d'ouverture et, au moyen d'aimants permanents, dans la position de fermeture, et la force magnétique ou l'intensité du champ magnétique agissant dans la position de fermeture de l'organe de fermeture (15) étant plus faible que la force d'ouverture du moyen d'actionnement agissant sur l'organe de fermeture (15),
a) un premier aimant permanent (24) étant disposé à l'intérieur du boîtier de soupape (11) sur un support fixe et un deuxième aimant permanent (25) étant disposé sur l'organe de fermeture (15), en regard de celui-ci et avec un pôle magnétique dirigé dans le même sens, et
b) les aimants permanents (24, 25) réalisés de manière à présenter des dimensions transversales légèrement plus petites étant encastrés d'une part dans le support et d'autre part dans l'organe de fermeture (15), de telle sorte que les pôles magnétiques dirigés dans le même sens des deux aimants permanents soient tournés l'un vers l'autre, et
c) les aimants individuels (24, 25) disposés de manière adjacente l'un à l'autre présentent, dans la position finale où ils sont tournés l'un vers l'autre, en particulier correspondant à la position d'ouverture de l'organe de fermeture (15), une distance définie l'un par rapport à l'autre au moyen d'organes d'espacement ou d'écarteurs à l'extérieur de la région des aimants individuels (24, 25), à savoir au moyen d'une pièce d'écartement (26) annulaire disposée à l'extrémité de l'organe de fermeture (15) et pourvue de passages (27) orientés transversalement pour le passage de colle.

2. Soupape selon la revendication 1, **caractérisée en ce que**, lorsque la soupape est ouverte, c'est-à-dire en cas de position de l'organe de fermeture (15) retirée du siège de soupape (14), les aimants permanents (24, 25) sont fixés à distance, en particulier à faible distance, l'un de l'autre, en particulier au moyen d'écarteurs (26) sur une surface frontale de l'organe de fermeture (15) et/ou sur le support de l'aimant permanent (24) fixé solidement.

3. Soupape selon la revendication 1 ou 2, **caractérisée en ce que** les écarteurs sont constitués d'une pièce d'écartement (26), en particulier d'une pièce d'écartement annulaire, disposée à l'extérieur de la région de l'aimant permanent (25), laquelle pièce d'écartement constituée par des interruptions, en particulier par des passages (27) orientés radialement dans des écarteurs individuels distribués le long de la périphérie de l'organe de fermeture (15), les passages (27) servant à l'écoulement du milieu coulant.

4. Soupape selon la revendication 1 ou selon l'une quelconque des autres revendications, **caractérisée en ce que** l'organe de fermeture allongé approximativement cylindrique présente, sur la périphérie extérieure, des évidements, des canaux (36), des rainures ou similaires s'étendant dans la direction longitudinale avec des saillies (37) de type nervures ou ailettes dans la direction longitudinale de l'organe de fermeture (15) à chaque fois entre plusieurs canaux (36), rainures, évidements ou similaires distribués dans la direction périphérique, les saillies (37) servant à l'appui de l'organe de fermeture (15) contre une surface intérieure (35) de préférence cylindrique du boîtier de soupape (11).

5. Soupape selon la revendication 1 ou selon l'une quelconque des autres revendications, **caractérisée en ce que**, dans le boîtier de soupape (11), à savoir dans un espace intérieur (20) de préférence approximativement cylindrique du boîtier (11), est disposé un organe d'appui, en particulier une pièce de fermeture (21), remplissant l'espace inférieur (20), en tant que support de l'aimant permanent (24) fixe dans la région d'extrémité inférieure, la pièce de fermeture (21) servant de préférence de butée pour l'organe de fermeture (15) dans la position d'ouverture.

6. Soupape selon la revendication 5 ou selon l'une quelconque des autres revendications, **caractérisée en ce que** la pièce de fermeture (21) est retenue de manière réglable dans le boîtier de soupape (11), en particulier au moyen d'une vis de réglage (41) sortant du boîtier de soupape (11), laquelle est reliée à la pièce de fermeture (21), de préférence par entrée d'une extrémité libre de la vis de réglage (41) dans un évidement axial (42) de la pièce de fermeture (21) et par liaison l'une à l'autre par un ajustement forcé et/ou par collage.

7. Soupape selon la revendication 1 ou selon l'une quelconque des autres revendications, **caractérisée par** l'agencement de moyens de refroidissement à l'intérieur du boîtier de soupape (11), en particulier à proximité de l'électroaimant (23) ou de son enroulement, les moyens de refroidissement étant de préférence réalisés sous la forme de caloducs verticaux (38) et étant disposés dans le boîtier de soupape (11) de telle sorte qu'une ouverture de sortie orientée de préférence vers le haut soit dégagée.

8. Soupape selon la revendication 7 ou selon l'une quelconque des autres revendications, **caractérisée en ce que**, dans le cas d'un boîtier de soupape (11) présentant une section transversale essentiellement rectangulaire ou carrée, en particulier quatre caloducs (38) sont respectivement disposés dans la région de coins du boîtier de soupape (11).

9. Soupape selon la revendication 7 ou selon l'une quelconque des autres revendications, **caractérisée en ce que** les caloducs tubulaires (38) font saillie hors du boîtier de soupape (11) au niveau d'un côté supérieur par un prolongement, à savoir une pièce tubulaire libre (39), des lamelles (40) orientées transversalement étant montées dans la région de la pièce tubulaire (39) pour la dissipation de la chaleur.
